# EUROPÄISCHE PATENTANMELDUNG

(11) **EP 3 061 550 A1**
(43) Veröffentlichungstag der Anmeldung: **31.08.2016**
(21) Anmeldenummer: 16000102.0
(22) Anmeldetag: 16.01.2016
(51) Int. Cl.: B23B 51/10

(54) **ENTGRATWERKZEUG ZUR ENTGRATUNG VON UNRUNDEN KONTUREN AN WERKSTÜCKEN**

(30) Priorität: 27.02.2015 DE 102015002503
(71) Anmelder: Heule Werkzeug AG, 9436 Balgach (CH)
(72) Erfinder: STUDER, Harry, 9436 Balgach (CH)
(74) Vertreter: Riebling, Peter

(57) **Zusammenfassung**

Entgratwerkzeug zur Entgratung von unrunden Konturen an Werkstücken (22) bestehend aus einem Werkzeugschaft (1) zur Befestigung in einer Bahnführungsmaschine (32), welches geeignet ist, das Entgratwerkzeug (1, 2) mit seiner Maschinenbewegung (29, 30, 33) entlang einer mindestens in radialer Richtung unrunden Werkstückkontur (24) entlang zu führen, wobei sich mindestens ein mit mindestens einer Schneidkante (14) ausgestattetes Entgratmesser (12) federbelastet an der Werkstückkontur (24) spanabhebend anlegt und entlang der Werkstückkontur (24) bewegbar ist.

## Beschreibung

Die Erfindung betrifft ein Entgratwerkzeug zur Entgratung von unrunden Konturen an Werkstücken nach dem Oberbegriff des Patentanspruches 1.

Mit dem Gegenstand der EP 0 446 767 B1 ist ein Entgratwerkzeug der eingangs genannten Art bekannt geworden, das mit einem federbelasteten Kippmesser arbeitet. Das Entgratwerkzeug wird am Werkzeugschaft drehend angetrieben und hat Umdrehungszahlen im Bereich von 500 bis 10000 Umdrehungen pro Minute.

Die Entgratwirkung erfolgt demnach durch eine drehende Bewegung des Entgratmessers um die axiale Achse einer zylindrischen Bohrung hindurch, wobei lediglich die in axialer Richtung vorwärts und rückwärts gerichteten Ränder der zylindrischen Bohrung zu entgraten sind. Für die Entgratung von unrunden Bohrungsdurchmessern in radialer Richtung einer Bohrung oder unrunden Ausnehmung ist ein solches Entgratwerkzeug nicht geeignet.

Der gleiche Nachteil gilt auch für die EP 2 161 090 A2, obwohl dort ein Entgratmesser zum Entgraten von ebenen und unebenen Bohrungsrändern vorgeschlagen wird. Mit dem Begriff "unebenen Bohrungsrändern" wird jedoch nur verstanden, dass sich die Kontur in axialer Richtung ändert, nicht aber in radialer Richtung.

Der Erfindung liegt deshalb die Aufgabe zugrunde, ein Entgratwerkzeug zur Entgratung von radial unrunden und gegebenenfalls auch axial unrunden Konturen an Werkstücken zu schaffen.

Zur Lösung der gestellten Aufgabe ist die Erfindung durch die technische Lehre des Anspruches 1 gekennzeichnet.

Merkmal der Erfindung ist, dass nunmehr das Entgratwerkzeug als Bahnverfolgungswerkzeug ausgebildet ist, was bedeutet, dass es nicht bezüglich seiner Längsmittenachse axial drehend angetrieben ist, sondern es wird in der Art eines Schabers oder eines Schälwerkzeugs entlang der unrunden Werkstückkontur entlanggeführt, so dass das Entgratwerkzeug auf eine Bahnführungsmaschine angewiesen ist, welches die zu entgratende Werkstückkontur vorgibt und das Entgratwerkzeug entlang dieser Werkstückkontur entlang führt.

Bei dieser Bahnführungsmaschine handelt es sich um eine Maschinensteuerung, die in der Lage ist, das erfindungsgemäße Entgratwerkzeug, den in radialer Richtung gesehen unrunden Werkstückkonturen nachzuführen.

Die Nachführung eines Entgratwerkzeuges in der Art eines Bahnverfolgungswerkzeuges, bedeutet, dass die nachzuverfolgende Werkstückkontur annähernd in einem das Entgratwerkzeug führende Bahnführungsmaschine nachgebildet wird, und das Entgratwerkzeug genau an dieser nachgebildeten Führungskontur entlang geführt wird.

Es handelt sich deshalb nicht um ein drehend angetriebenes Entgratmesser, sondern um ein Entgratmesser, dessen Längsachse im Wesentlichen immer senkrecht zur Bahnkontur steht, womit der beste Entgrat- oder Abschäleffekt erzielt wird. Die Erfindung ist jedoch nicht auf eine genau senkrechte Ausrichtung der Längsachse des Entgratmessers zur Längsachse der jeweiligen Bahn beschränkt. Es können auch Winkel zwischen der Längsachse des Entgratmessers und der Bahnkontur vorgesehen werden, die im Bereich von 0 bis 15 Grad liegen.

Sofern ein Winkel zwischen der Längsachse des Entgratmessers und der Längsachse der nachzufahrenden Werkstückkontur besteht, handelt es sich um ein schräg gestelltes Entgratmesser, welches in der Art eines Schälmessers oder eines Schabers in einer bestimmten Winkelstellung der beabsichtigten Führungsbahn nachfährt. Damit kann in manchen Fällen der Schabe- oder der Abschäleffekt bei der spanabhebenden Bearbeitung von Bohrungsrändern verbessert werden.

Kennzeichnend für die Erfindung ist auch, dass es sich um ein Bahnverfolgungswerkzeug in der Ausbildung als Entgratwerkzeug handelt, und dass das zerspanende Werkzeug als Entgratmesser ausgebildet ist, welches durch einen Zerspanungsvorgang entlang einer - möglicherweise auch in horizontaler Richtung - unrunden, aber auch in radialer Richtung unrunden und vielfach gekrümmten Werkstückkontur entlang folgt.

Die Erfindung ist also nicht auf ein Entgratwerkzeug zur Bahnverfolgung von in radialer Richtung unrunden Werkstückkonturen geeignet, sondern es kann auch noch zusätzlich vorgesehen sein, dass die Werkstückkontur in horizontaler Ebene unrund ist, das heißt, dass die in radialer Richtung unrunde Werkstückkontur noch zusätzlich in axialer Richtung mit Bergen und Tälern versehen ist, und das erfindungsgemäß federbelastete Entgratmesser ist in der Lage, diesen Bergen und Tälern in Verbindung mit der zusätzlich radial unrunden Werkstückkontur zu folgen, um die Werkstückkonturen in zwei zueinander senkrechten Richtungen zuverlässig zu entgraten.

Eine besondere Rolle spielt die Anwendung eines erfindungsgemäßen Entgratwerkzeuges bei der Entgratung von Gusswerkstücken und insbesondere bei der Entgratung von zum Beispiel Turboladergehäusen oder Verdichtergehäusen.

Bei solchen Gussgehäusen besteht nämlich das Problem, dass unrunde, insbesondere spiralige Gusskonturen vorhanden sind, die bei einem Gussgehäuse eines Turboladers entgratet werden müssen, um qualitativ hochwertige Einlauf- und Strömungsflächen zu bilden.

Hier setzt die Erfindung ein, die vorsieht, dass das Entgratwerkzeug auch zur Außenentgratung von unrunden, insbesondere spiraligen Werkstückkonturen geeignet ist.

Die Innenentgratung, das heißt die Entgratung von innenliegenden Werkstückkonturen, ist relativ bekannt und auch durch die vorstehend genannten Entgratwerkzeuge möglich, die allerdings drehend angetrieben sind.

Bei der vorliegenden Erfindung handelt es sich stattdessen um ein Entgratwerkzeug, das ein schräg nach außen gerichtetes, federbelastetes Entgratmesser vorschlägt, an dessen einen Seite, bevorzugt der Unterseite, mindestens eine Schneidkante angeordnet ist. Die Schneidkante verhält sich wie eine Schabeleiste oder eine Schabekante und wird unter Federlast auf die zu entgratende Werkstückkontur aufgesetzt und längs dieser radial veränderlichen Werkstückkontur entlanggeführt. Darüber hinaus kann die radial veränderliche Werkstückkontur auch noch in axialer Richtung uneben sein und wird zuverlässig entgratet. Ein Drehantrieb des in axialer Richtung ausgerichteten Werkzeugschaftes findet nicht statt.

Ein weiteres Merkmal der Erfindung ist, dass im Ruhezustand das federbelastet, schwenkbar gelagerte Entgratmesser in einem bestimmten Winkel auswärts des Grundkörpers des Entgratmessers ausgerichtet ist, das heißt, es steht im unbelasteten Ruhezustand mit seiner Schneidkante radial auswärts über den Außenumfang des Grundkörpers hinaus.

Damit gibt es erstmals die Möglichkeit, dass man in eine Bohrung oder eine Ausnehmung hineinfahren kann und die von der Bohrung oder Ausnehmung abgewandten, radial außen liegenden Werkstückkonturen mit einem solchen Entgratmesser entgraten kann.

Im unbelasteten Ruhezustand bildet das Entgratmesser mit seiner Längsachse bezüglich der Vertikalen ein Grundwinkel von zum Beispiel zwischen 30 und 60 Grad, wobei kennzeichnend ist, dass der Grundwinkel im Ruhezustand federbelastet beibehalten wird.

Sobald das Entgratmesser mit dem daran angesetzten Messerhalter um einen Winkel aus seiner federbelasteten Neutrallage herausgeschwenkt wird, indem es zum Beispiel federbelastet auf eine nachzuführende Werkstückkontur aufgesetzt wird, kommt es zu dem vorher genannten federvorbelasteten Schäl- oder Schabeeffekt.

Das Entgratmesser nimmt zum Beispiel ausgehend von einem Grundwinkel (von zum Beispiel 45 Grad) nunmehr einen Arbeitswinkel von 60 Grad ein. Unter diesem Arbeitswinkel wird das Entgratmesser federbelastet unter der Wirkung einer geeigneten Biegefeder oder einem anderen geeigneten Kraftspeicher auf der Werkstückkontur aufgedrückt und federbelastet entlang dieser Werkstückkontur entlang geführt.

In der beispielhaft zeichnerisch dargestellten Ausführungsform ist vorgesehen, dass das Entgratmesser für die Entgratung einer von einer Bohrung abgewandten Kontur bestimmt ist. Es soll demnach die radial außen liegende Kontur einer abgestuften Ausnehmung entgratet werden.

In einer Umkehrung des beschriebenen Entgratmessers ist es jedoch auch vorgesehen, dass das Entgratmesser zur Entgratung von Werkstückkonturen geeignet ist, die auf der inneren Seite der Bohrung, das heißt innenliegend, angeordnet sind.

Für beide Anwendungsfälle wird getrennter Schutz beansprucht.

Die Erfindung ist im Übrigen nicht auf die Federvorbelastung des drehbar und federbelastet, rotativ in einem Grundkörper gehaltenen Messerhalters beschränkt.

In einer bevorzugten Ausgestaltung ist es jedoch vorgesehen, dass am Außenumfang eines etwa rund ausgebildeten und drehbar in einer Ausnehmung im Grundkörper gehaltenen Messerhalters das freie biegbare Ende einer Blattfeder eingreift, die somit das fest im Messerhalter aufgenommene Entgratmesser in einer bestimmten auswärts geschwenkten Ruheposition hält, wobei die Federkraft erst bei der Verschwenkung des Messerhalters in eine Arbeitsposition verstärkt wird.

In einer anderen Ausgestaltung der Erfindung kann es vorgesehen sein, dass statt einer Blattfeder auch andere Federbelastungselemente oder Kraftspeicher zur Vorspannung des Messerhalters verwendet werden. So kann es vorgesehen sein, dass im Drehzentrum des Messerhalters eine Torsionsfeder angeordnet ist, welche den Messerhalter federbelastet in einer bestimmten Grundposition hält, und die Federkraft dann verstärkt wird, wenn der Messerhalter um eine bestimmte Drehposition außerhalb seiner Ruheposition gedreht wird.

Bei allen Ausführungsbeispielen wird vorausgesetzt, dass das Entgratmesser in radialer Richtung in einem etwa zylindrischen Messerhalter befestigt ist, wobei die Erfindung nicht auf ein einziges Entgratmesser angewiesen ist. Es kann auch vorgesehen sein, dass im Messerhalter anstatt eines einzigen Entgratmessers nunmehr zwei einander gegenüberliegende Entgratmesser angeordnet sind.

Statt einer Torsionsfeder, die bevorzugt im Drehzentrum des Messerhalters angeordnet ist, können auch andere Kraftspeicher verwendet werden, wie zum Beispiel Elastomerfedern, Schraubendruckfedern und dergleichen mehr.

Es kommt also nur darauf an, dass der Messerhalter mit dem radial schräg nach außen gestellten Entgratmesser in einer bestimmten, schräg nach außen gerichteten Ruheposition federvorbelastet ist, und die Federlast verstärkt wird, sobald das Entgratmesser von seiner ausgeschwenkten Ruheposition in eine noch stärker ausgeschwenkte Arbeitsposition verschwenkt wird.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: perspektivische Ansicht eines Entgratwerkzeuges nach der Erfindung
Figur 2: schematisiert die Ansicht der Bahnverfolgung des Entgratwerkzeuges entlang einer Werkstückkontur
Figur 3: schematisiert das Wirkungsprinzip des Entgratwerkzeuges nach der Erfindung in der Ruheposition
Figur 3a: schematisiert das Wirkungsprinzip in der Arbeitsstellung
Figur 3b: schematisiert die Umkehrung der Funktion des Entgratwerkzeuges zum Entgraten von radial innenliegenden Werkstückkonturen
Figur 3c: eine abgewandelte Ausführung mit einem doppelten Entgratmesser
Figur 4: eine perspektivische Ansicht des Entgratwerkzeuges in der Art des Entgratwerkzeuges nach Figur 1
Figur 5: Schnitt durch ein Entgratwerkzeug während des Entgratvorganges
Figur 6: das Entgratwerkzeug nach Figuren 1 bis 5 in der Arbeitsposition bei der Entgratung einer radial außenliegenden Werkstückkontur bezüglich einer zentralen Werkstücköffnung
Figur 7: ein erster Verfahrensablauf beim Einfahren des Entgratwerkzeuges in einer Werkstücköffnung
Figur 8: die fortschreitende Bewegung im Vergleich zu Figur 7
Figur 9: die endgültige Ruheposition des Entgratwerkzeuges in der Werkstücköffnung
Figur 10: die Ruheposition des Entgratwerkzeuges in einer Darstellung gemäß Figur 9
Figur 11: die Arbeitsposition des Entgratwerkzeuges im Vergleich zu Figur 10

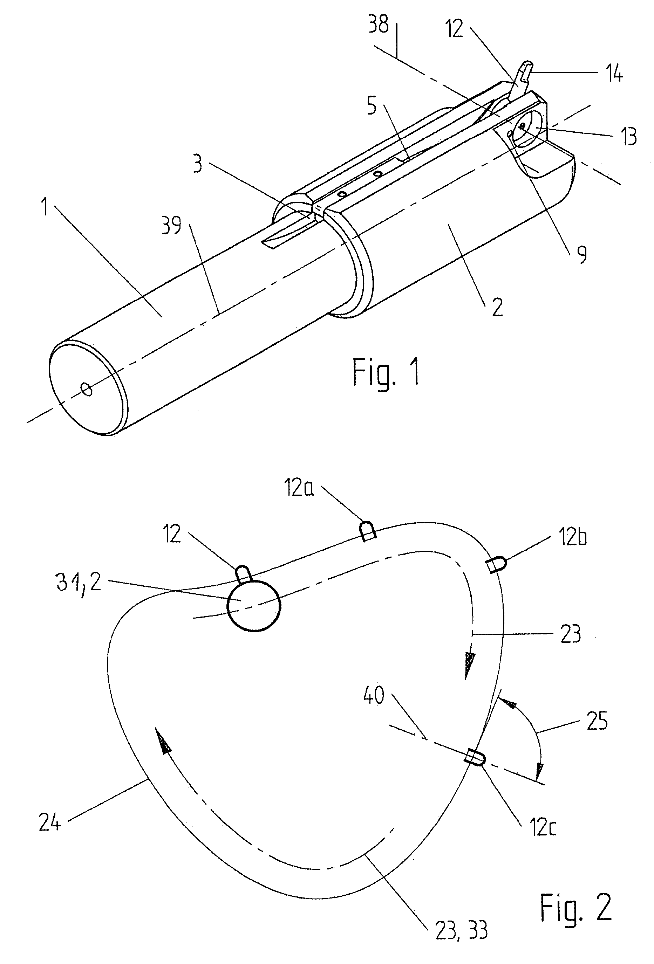

Das erfindungsgemäße Entgratwerkzeug in Figur 1 besteht im Wesentlichen aus einem zylindrischen Werkzeugschaft 1, an dem entweder einteilig oder mehrteilig ein Grundkörper 2 befestigt ist. Im Grundkörper 2 ist eine einseitig am Außenumfang des Grundkörpers 2 eingearbeitete Längsnut 3 eingearbeitet, die sich vom hinteren Teil des Grundkörpers 2 bis zur vorderen Stirnseite 37 erstreckt.

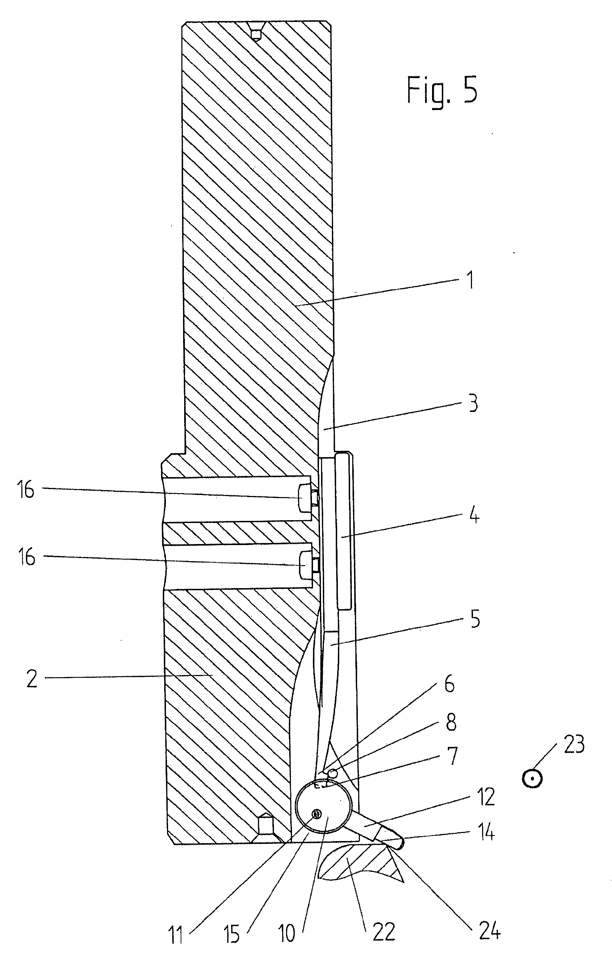

Gemäß Figur 5 ist im Bereich der Längsnut 3 eine Biegefeder 5 eingeklemmt, deren hinteres Ende von einer Klemmleiste 4 gehalten wird. Die Klemmleiste 4 wird im Bereich des Grundkörpers 2 mithilfe von Klemmschrauben 16 befestigt, sodass das hintere Ende der Biegefeder 5 am hinteren Teil des Grundkörpers 2 eingespannt ist.

Das vordere freie Ende der Biegefeder 5 greift gemäß Figur 5 in eine am Außenumfang eines Messerhalters 10 radial eingearbeitete vertiefte Ausnehmung 7 ein und ist dort unverschiebbar gelagert.

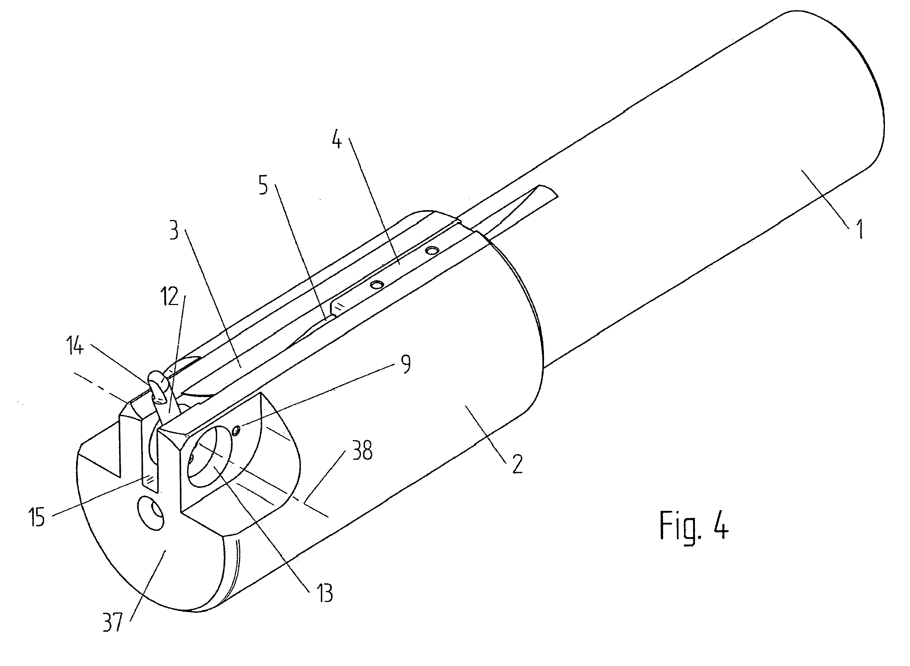

Der bevorzugt zylindrisch ausgebildete Messerhalter 10 ist gemäß Figuren 1 und 4 am vorderen freien Ende des Grundkörpers 2 in zueinander gegenüberliegenden und fluchtend zueinander angeordneten Lagerbohrungen 13 drehbar gelagert.

In Figuren 1 und 4 ist die Drehachse 38 eingezeichnet. Die Drehachse 38 ist senkrecht zur Längsachse des Entgratwerkzeuges ausgebildet.

Die Erfindung ist nicht darauf beschränkt, dass die Lagerbohrung 13 zur drehbaren Aufnahme des Messerhalters 10 exzentrisch zur Längsmittenachse des Grundkörpers 2 ausgebildet ist.

Es kann auch in einer anderen Ausführungsform vorgesehen sein, dass die Lagerbohrung 13 zentrisch und fluchtend in der Längsachse 39 des Entgratwerkzeuges angeordnet ist.

Wichtig bei der Erfindung ist, dass am Umfang des Messerhalters 10 mindestens ein Entgratmesser 12 befestigt ist, welches radial vom Außenumfang des Messerhalters 10 ausgehend nach außen gerichtet ist.

Die Befestigung des Entgratmessers 12 im Messerhalter 10 erfolgt bevorzugt dergestalt, dass die Längsachse 40 durch das Entgratmesser 12 durch die Mittenachse (Drehachse 38) des Messerhalters 10 hindurchgeht und diese Achse schneidet.

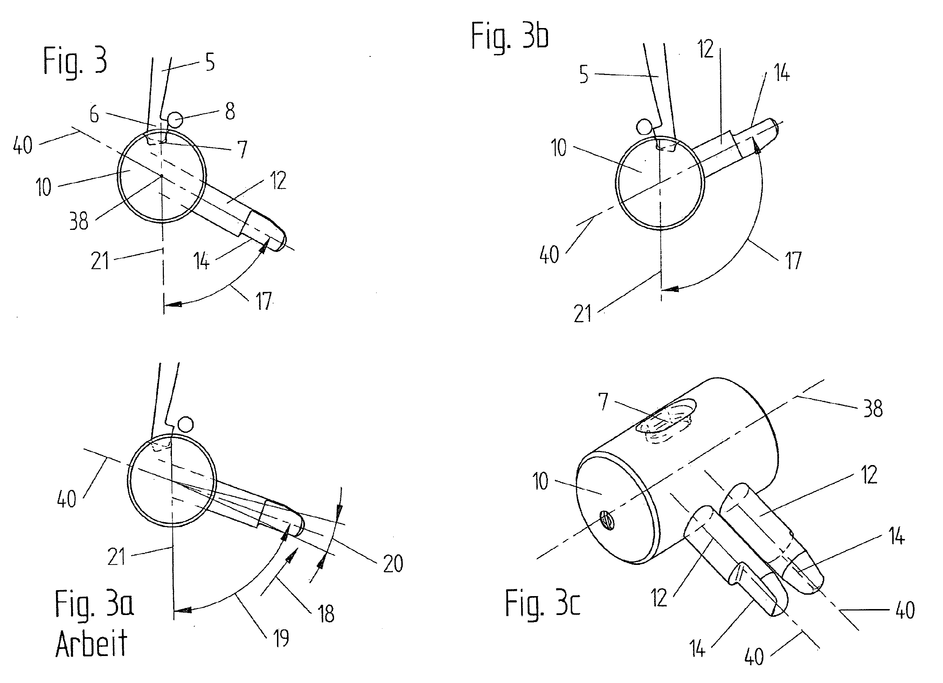

Die Figur 3 zeigt ein solches Ausführungsbeispiel, bei dem die Längsachse 40 durch das Entgratmesser 12 die Drehachse 38 im Messerhalter 10 schneidet.

Hierauf ist jedoch die Erfindung nicht beschränkt. In einer anderen Ausgestaltung kann es auch vorgesehen sein, dass die Längsachse 40 des Entgratmessers 12 exzentrisch zur Drehachse 38 ausgebildet ist, das heißt die Drehachse nicht schneidet, sondern einen Versatz nach oben oder unten zur Drehachse 38 hat.

Ebenso ist die Erfindung nicht auf die Anordnung eines einzigen Entgratmessers 12 gemäß Figur 3 beschränkt. Es kann auch vorgesehen sein, dass fluchtend gegenüber dem ersten Entgratmesser 12 in der Längsachse 40 ein gleiches Entgratmesser 12 diametral gegenüberliegend oder auch in gleicher Richtung weisend (siehe Figur 3c), aber in einem bestimmten Abstand, angeordnet ist.

Ebenso können andere Entgratmesser neben dem Entgratmesser 12 vorgesehen sein, die nicht im Bereich der Längsachse 40 angeordnet sind, sondern einen Winkel zu der Längsachse 40 durch das Entgratmesser 12 bilden, und ebenfalls radial nach außen gerichtet am Außenumfang des Messerhalters 10 angeordnet sein.

In einer Weiterbildung der vorliegenden Erfindung ist die Erfindung im Übrigen nicht darauf beschränkt, ein einziges Entgratmesser an dem Messerhalter anzuordnen, sondern es können in einer bestimmten Winkellage des Entgratmessers auch mehrere zueinander parallele Entgratmesser 12 vorgesehen sein, wobei das eine Entgratmesser zum Beispiel eine Schneidkante für die eine Richtung aufweist, während das andere Entgratmesser eine Schneidkante 14 für eine andere Richtung der Werkstückkontur aufweist, dies ist in Figur 3c dargestellt.

Wichtig bei allen Ausführungsformen ist, dass das Entgratmesser 12 in der federbelasteten Grundstellung in einer neutralen Position bereits schon schräg ausgeschwenkt aus dem vorderen Grundkörper 2 gehalten ist (siehe Figur 3), und bei Ausführung eines Entgratvorganges entlang einer radial unrunden Werkstückkontur nunmehr eine Vorschubbewegung auf dem Werkzeugschaft und dem Grundkörper stattfindet, wodurch das Entgratmesser gegen die Vorschubrichtung federvorgespannt wird, und unter dieser Federlast nunmehr die Werkstückkontur abfährt (siehe Figur 3a).

Dabei kommt es zu einem Abschäl- oder einem Schabeeffekt, der somit die an den unrunden Werkstückkonturen anhaftenden Grate und Späne zuverlässig entfernt.

In Figur 3 ist noch dargestellt, dass ein Arretierstift 8 im Grundkörper 2 angeordnet ist, der sich unter Vorspannung an das vordere freie Ende 6 der Biegefeder 5 anlegt. Das vordere freie Ende 6 greift federvorbelastet in die Ausnehmung 7 am Messerhalter 10 ein.

Der Arretierstift 8 legt sich somit an der einen Seite des freien federnden Endes 6 der Biegefeder 5 an, und spannt diese somit in der neutralen Ruheposition, wie sie in Figur 3 dargestellt ist, bereits schon mit einer Federvorspannung vor.

Somit steht die Längsachse 40 des Messerhalters 10 gemäß Figur 3 bereits schon unter einer Federvorspannung, und der Winkel (Ruhewinkel 17) ist zwischen der Vertikalen 21 und der Längsachse 40 gebildet.

Zum Übergang in die Arbeitsstellung wird der Messerhalter 10 zusammen mit dem dort befestigten Entgratmesser 12 in Pfeilrichtung 18 in den Winkel 19 weiter verschwenkt, wodurch die Federkraft der Biegefeder 5 zunimmt, und die Verschwenkung in Pfeilrichtung 18 erfolgt unter Überwindung der Federkraft der Biegefeder 5.

Bei der Verschwenkung in Pfeilrichtung 18 wird der Arbeitswinkel 19 eingenommen, der eine stärker auswärts geschwenkte Position des Entgratmessers 12 zeigt. Im Bereich des Arbeitswinkels 19 erfolgt eine oszillierende Nachführung, das heißt eine federbelastete Nachführung des federvorgespannten Entgratmessers 12 in den Pfeilrichtungen 20.

Somit können nicht nur radial unrunde Werkstückkonturen 24 gemäß Figur 2 nachgefahren werden, sondern auch solche Werkstückkonturen, die neben der radialen Unrundheit noch einen axialen Versatz zur Zeichenebene der Figur 2 einnehmen.

Selbstverständlich finden auch Abweichungen von der radialen Werkstückkontur 24 Beachtung, weil das Entgratmesser 12 federbelastet gegen diese Werkstückkontur 24 geführt wird, wie in Figur 2 dargestellt.

In Figur 2 ist erkennbar, dass in einer bevorzugten Ausgestaltung die Längsachse 40 normal zur Längsachse durch die Werkstückkontur 24 ist. Das heißt, das Entgratmesser 12 ist in senkrechter Richtung auswärts gerichtet und wird in dieser Position entlang der Werkstückkontur 24 in Pfeilrichtung 23 entlang geführt.

Die Erfindung ist nicht auf eine normale Ausrichtung der Längsachse 40 des Entgratmessers 12 bezüglich der Werkstückkontur 24 beschränkt. Es können auch bestimmte Winkelgrade dazwischen liegen, zum Beispiel Winkel im Bereich zwischen 0 bis 15 Grad, wodurch dann die Längsachse 40 einen Winkel zur Werkstückkontur 24 einnimmt und dann in diesem Fall eine schräg zur Längsachse der Werkstückkontur 24 gerichtete, schälende oder abschälende Wirkung erfolgt.

Insgesamt ist mit dem Bezugszeichen 22 ein Werkstück gezeigt, das in Figur 2 jedoch nur in der Art seiner Werkstückkontur 24 angedeutet ist.

Die Figur 3a zeigt den ausgeschwenkten Zustand des Entgratmessers 12 beim Aufsetzen auf eine Werkstückkontur 24, wobei das Abfahren der Werkstückkontur 24 unter der Federlast der Biegefeder 5 erfolgt.

Die Figur 3b zeigt eine kinematische Umkehrung des Entgratwerkzeuges nach Figur 3 und Figur 3a, was bedeutet, dass das Entgratmesser nach Figur 3b zur Entgratung von radial innenliegenden unrunden Werkstückkonturen 24 geeignet ist, während das Entgratwerkzeug nach Figuren 3 und 3a zur Entgratung von radial außenliegenden Werkstückkonturen geeignet ist.

Die Figur 5 zeigt einen Entgratungsvorgang einer radial außenliegenden Werkstückkontur 24 an einem Werkstück 22. Hier ist erkennbar, dass sich die Biegefeder 5 an ihrem vorderen freien Ende biegt und gegen den Arretierstift 8 vorspannt, wobei eine Schneidkante 14 des Entgratmessers 12 auf der Werkstückkontur 24 senkrecht zur Zeichenebene der Figur 5, nämlich in Arbeitsrichtung 23, entlangfährt.

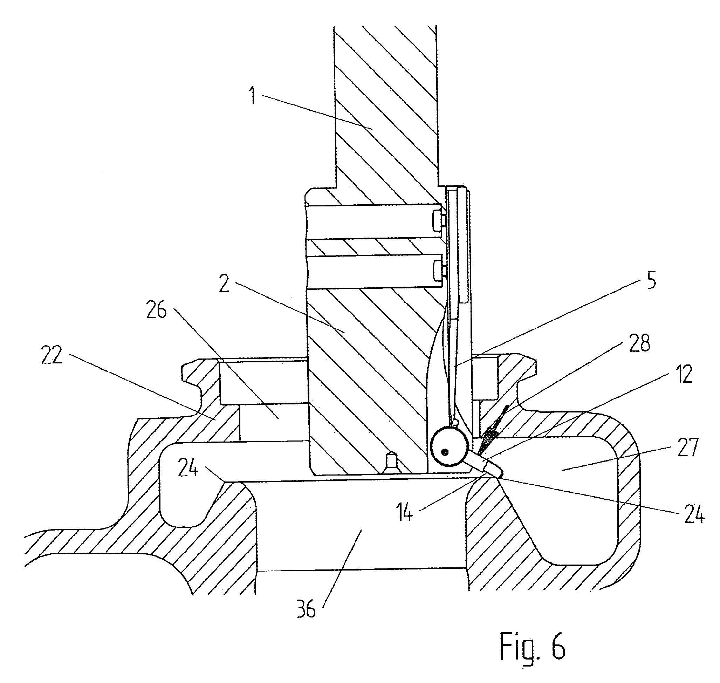

In Figur 6 ist dargestellt, dass ein solches Entgratwerkzeug zum Entgraten von außen liegenden Werkstückkonturen im Werkstückinneren geeignet ist. Das Entgratwerkzeug nach Figur 6 fährt zunächst durch die Werkstückausnehmung 26 hindurch und gelangt in den radial auswärtsliegenden Bereich einer Hohlkammer 27, an die sich axial abwärts eine Werkstücköffnung 36 anschließt.

Die Aufgabe ist nun, dass das Entgratmesser 12 die radial außenliegende Werkstückkontur 24 entgratet.

Dies erfolgt beim Aufsetzen der Schneidkante 14 auf die Werkstückkontur 24 unter der Last der Biegefeder, die in Pfeilrichtung 28 einwirkt.

Insgesamt lässt sich sagen, dass das Entgratmesser 12 eine bestimmte Drehbeweglichkeit in der Längsnut 3 des Grundkörpers 2 haben muss, und zu diesem Zweck ist dort eine Freistellung in der Art einer Längsnut 15 angeordnet.

Die Längsnut 15 dient dazu, dem Entgratmesser 12 seine Winkelbeweglichkeit zu verleihen.

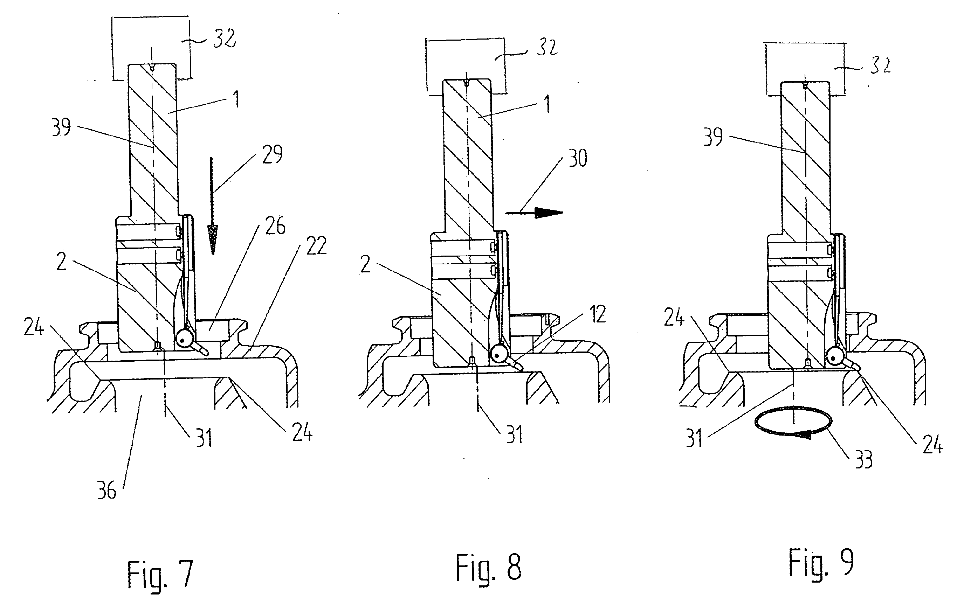

Die Figuren 7 bis 9 zeigen nun den Vorgang des Einfahrens eines Entgratmessers in ein Werkstück 22 gemäß Figur 6. Zur Führung des Entgratwerkzeuges wird eine Bahnführungsmaschine 32 verwendet, in das das Entgratwerkzeug eingespannt ist. Die Bahnführungsmaschine 32 führt alle Führungsbewegungen in den Pfeilrichtungen 29, 30 und 33 aus. Die Führungsbewegung in Pfeilrichtung 33 entspricht der Werkstückkontur 24. Demnach stellt die Bahnführungsmaschine 32 das mit ihm verbundene Entgratwerkzeug in axialer Richtung auf eine Ausnehmung 26 in einem Werkstück 22 zu.

Gemäß Figur 7 erfolgt zunächst eine (axial gerichtete) Abwärtsbewegung in Pfeilrichtung 29, wodurch das Entgratwerkzeug in die obere Ausnehmung 26 des Werkstücks 22 eintaucht.

Danach wird gemäß Figur 8 das Entgratmesser senkrecht zu seiner Längsachse 39 in radialer Pfeilrichtung 30 verschoben, und gelangt so mit seinem schräg nach außen gerichteten Entgratmesser hinter die Werkstückkontur 24, die zu entgraten ist.

Die Figur 9 zeigt schließlich die Grundposition kurz vor Arbeitsaufnahme des Entgratens. Dort ist erkennbar, dass das Entgratmesser 12 in der Ruhestellung ohne Federlast auf der Werkstückkontur 24 aufliegt, und dass nunmehr auch in dieser Grundstellung eine Bahnverfolgung des Entgratwerkzeuges gemäß der Maschinenbewegung 33 der Bahnführungsmaschine 32 stattfindet. Es ist lediglich zeichnerisch dargestellt, dass die Maschinenbewegung 33 der Bahnführungsmaschine 32 die Führungsbahn für die zu entgratende Werkstückkontur 24 vorgibt, wie dies anhand der Figur 2 erläutert wurde.

Daraus ergibt sich, dass die zu entgratende Werkstückkontur 24 vor dem Entgratungsvorgang der Werkstückkontur 24 der Bahnführungsmaschine 32 eingegeben werden muss, um der Steuerung der Bahnführungsmaschine 32 die nachzufahrende Werkstückkontur 24 vorzugeben, um das mindestens eine mit mindestens einer Schneidkante 14 ausgestattete Entgratmesser 12 federbelastet an der Werkstückkontur 24 spanabhebend entlang der Werkstückkontur 34 zu bewegen.

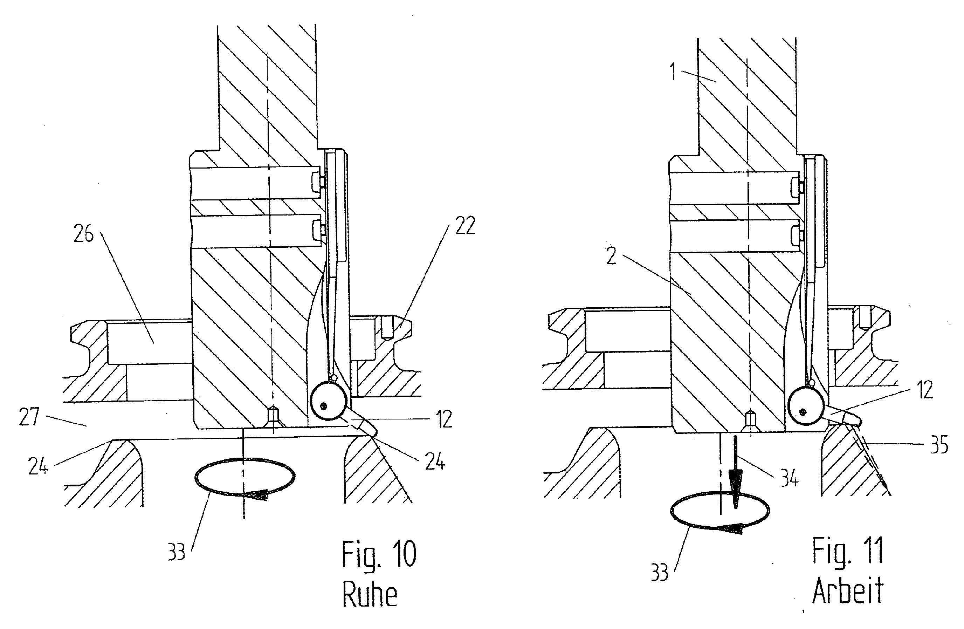

Die Figur 10 zeigt nochmals die Ruhestellung gemäß Figur 9 in vergrößerter Darstellung, wobei die Figur 11 die Arbeitsstellung zeigt, die zeigt, dass unter der Last der Biegefeder 5 das Entgratmesser 12 nach oben verschwenkt ist und sich unter Federlast mit seiner Schneidkante 14 federbelastet an die Werkstückkontur 24 anlegt und dort spanabhebend arbeitet.

Wichtig ist, dass die Flanke, die sich an die Werkstückkontur 24 anschließt, eine bestimmte Flankentoleranz 35 aufweisen kann, sodass durch die Federbelastung des Entgratmessers 12 auch derartige Flankentoleranzen 35 bewältigt werden können.

Während des Arbeitens erfolgt eine Zustellbewegung 34 in Richtung der Längsachse, und der Entgratvorgang erfolgt dann, indem das Entgratmesser 12 gemäß Figur 11 entlang einer unrunden Bahn mit einer geeigneten Bahnführungsmaschine, welche die Maschinenbewegung 33 ausführt, der unrunden Werkstückkontur 24 des Werkstücks 22 folgt.

### Zeichnungslegende

- 1: Werkzeugschaft
- 2: Grundkörper
- 3: Längsnut
- 4: Klemmleiste
- 5: Biegefeder
- 6: freies Ende von 5
- 7: Ausnehmung
- 8: Arretierstift
- 9: Bohrung für 8
- 10: Messerhalter
- 11: Querbefestigung von 12
- 12: Entgratmesser
- 13: Lagerbohrung
- 14: Schneidkante (von 12)
- 15: Längsnut (in 2)
- 16: Klemmschraube
- 17: Ruhewinkel
- 18: Pfeilrichtung
- 19: Arbeitswinkel
- 20: Pfeilrichtung
- 21: Vertikale
- 22: Werkstück
- 23: Arbeitsrichtung
- 24: Werkstückkontur
- 25: Führungswinkel
- 26: Ausnehmung (von 22)
- 27: Hohlkammer
- 28: Pfeilrichtung (Federlast)
- 29: Pfeilrichtung (Zufuhr)
- 30: Pfeilrichtung
- 31: Längsachse (Ausnehmung 22)
- 32: Bahnführungsmaschine
- 33: Maschinenbewegung
- 34: Zustellbewegung
- 35: Flankentoleranz
- 36: Werkstücköffnung
- 37: Stirnseite
- 38: Drehachse
- 39: Längsachse (von 1, 2)
- 40: Längsachse (von 12)

## Patentansprüche

1. Entgratwerkzeug zur Entgratung von unrunden Konturen an Werkstücken (22) bestehend aus einem Werkzeugschaft (1) zur Befestigung in einer Bahnführungsmaschine 32, welches geeignet ist, das Entgratwerkzeug (1, 2) mit seiner Maschinenbewegung (29, 30, 33) entlang einer mindestens in radialer Richtung unrunden Werkstückkontur (24) entlang zu führen, wobei sich mindestens ein mit mindestens einer Schneidkante (14) ausgestattetes Entgratmesser (12) federbelastet an der Werkstückkontur (34) spanabhebend anlegt und entlang der Werkstückkontur (24) bewegbar ist.

2. Entgratwerkzeug nach Anspruch 1, **dadurch gekennzeichnet, dass** die mindestens eine Schneidkante (14) des Entgratmessers (12) in der Art eines Schabers oder Schälwerkzeuges die mindestens in radialer Richtung unrunde Werkstückkontur (24) spanabhebend bearbeitet.

3. Entgratwerkzeug nach Anspruch 1 oder 2, **dadurch gekennzeichnet, dass** die Längsachse (40) des Entgratmessers (12) etwa senkrecht zur Werkstückkontur (24) gerichtet ist.

4. Entgratwerkzeug nach einem der Ansprüche 1 bis 3, **dadurch gekennzeichnet, dass** das Entgratmesser (12) mit seiner Längsachse (40) in radialer Richtung am Umfang eines etwa zylindrischen Messerhalters (10) aufgenommen ist, der drehbar und federbelastet in einer Lagerbohrung (13) eines Grundkörpers (2) des Entgratwerkzeugs aufgenommen ist.

5. Entgratwerkzeug nach Anspruch 4, **dadurch gekennzeichnet, dass** am Außenumfang des drehbar gelagerten Messerhalters (10) eine radial nach außen geöffnete Ausnehmung (7) angeordnet ist, in welche das freie biegbare Ende (6) einer einseitig am Grundkörper (2) eingespannten Biegefeder (5) eingreift.

6. Entgratwerkzeug nach einem der Ansprüche 1 bis 5, **dadurch gekennzeichnet, dass** im Ruhezustand das federbelastet, schwenkbar gelagerte Entgratmesser (12) in einem bestimmten Winkel (17) über die Außenkontur des Grundkörpers (2) heraus ragt.

7. Entgratwerkzeug nach einem der Ansprüche 1 bis 6, **dadurch gekennzeichnet, dass** im Messerhalter (10) zwei im gegenseitigen Abstand nebeneinander angeordnete gleichachsige Entgratmesser (12, 12) angeordnet sind, deren Schneidkanten (14) entgegen gesetzt gerichtet sind.

8. Entgratwerkzeug nach einem der Ansprüche 1 bis 7, **dadurch gekennzeichnet, dass** die Lagerbohrung (13) zur drehbaren Aufnahme des Messerhalters (10) exzentrisch zur Längsmittenachse (39) des Grundkörpers (2) ausgebildet ist.

9. Entgratwerkzeug nach einem der Ansprüche 1 bis 7, **dadurch gekennzeichnet, dass** die Lagerbohrung (13) zur drehbaren Aufnahme des Messerhalters (10) zentrisch und fluchtend in der Längsachse (39) des Entgratwerkzeuges angeordnet ist.

10. Entgratwerkzeug nach einem der Ansprüche 1 bis 9, **dadurch gekennzeichnet, dass** die Befestigung des Entgratmessers (12) im Messerhalter (10) dadurch erfolgt, dass die Längsachse (40) durch das Entgratmesser (12) die Mittenachse (Drehachse 38) des Messerhalters (10) schneidet.
